# EUROPEAN PATENT SPECIFICATION

(11) **EP 3 749 531 B1**
(45) Date of publication and mention of the grant of the patent: **24.01.2024**
(21) Application number: 19704753.3
(22) Date of filing: 05.02.2019
(51) Int. Cl.: B60C 1/00, C08L 9/06, C08L 9/00, C08L 53/02, C08L 47/00, C08L 57/02

(54) **RUBBER COMPOSITION FOR TYRES WITH GOOD WET GRIP AND ROLLING RESISTANCE PROPERTIES**
KAUTSCHUKZUSAMMENSETZUNG FÜR REIFEN MIT GUTEN NASSHAFTUNGS- UND ROLLWIDERSTANDSEIGENSCHAFTEN
COMPOSITION DE CAOUTCHOUC POUR PNEUMATIQUES PRÉSENTANT DE BONNES PROPRIÉTÉS D'ADHÉRENCE SUR SOL MOUILLÉ ET DE RÉSISTANCE AU ROULEMENT

(30) Priority: 06.02.2018 GB 201801886
(43) Date of publication of application: 16.12.2020
(73) Proprietor: Apollo Tyres Global R&D B.V., 7521 PT Enschede (NL)
(72) Inventor: GANESAN, Swarupini, 6811EZ Arnhem (NL); ZEEMAN, Raymond, 7582EJ Losser (NL); MARINUS, Sander, 7512BJ Enschede (NL); STEVENS, Hendrik, 30419 Hannover (DE)
(74) Representative: Michalski Hüttermann & Partner Patentanwälte mbB
(86) International application number: PCT/EP2019/052732
(87) International publication number: WO 2019/154791

(56) References cited:
- WO-A1-2016/202646
- FR-A1- 2 947 275
- FR-A1- 2 993 816

## Description

The present invention relates to a cross-linkable rubber composition, a method of preparing a cross-linkable rubber composition, a cross-linked rubber composition obtained by cross-linking such a rubber composition, a method of preparing a tyre and a tyre.

Tread rubber is one of the important portions of a pneumatic tyre which contributes enormously to the overall performance of a tyre. A tyre has to perform well in severe weather conditions and it has to exhibit a variety of performances such as wet grip, abrasion resistance and low rolling resistance.

It is well known in rubber compounding that there is a trade-off between wet grip and rolling resistance. The tread compound can be optimized to exhibit good wet grip by using high T_{g} polymers like SBR but it normally results in high rolling resistance. On the other hand, tuning the rubber compound by using low T_{g} polymers like BR to reduce rolling resistance possibly leads to impairment in wet grip. Several types of resins are therefore introduced to increase the wet grip properties but these often have a negative effect on the rolling resistance. In order to obtain high performance tyres, all properties need to be improved simultaneously.

WO 2012/152686 A1 describes a tyre that includes a tread, a crown with a crown reinforcement, first and second sidewalls, two beads, and a carcass reinforcement anchored to the two beads and extending from the first sidewall to the second sidewall. The tread includes a thermoplastic elastomer that is a block copolymer, which includes at least one elastomer block and at least one thermoplastic block. A total content of the thermoplastic elastomer in the tread is within a range varying from 65 to 100 phr (parts by weight per hundred parts of elastomer).

WO 2011/061145 describes a tyre, the tread of which comprises a rubber composition comprising at least one diene elastomer, such as SBR and/or BR, a reinforcing filler, such as silica and/or carbon black, and more than 10 phr, preferably more than 15 phr, of a hydrogenated styrene thermoplastic elastomer. This composition, which exhibits a reduced viscosity in the raw state, makes it possible to obtain treads of tires exhibiting a reduced rolling resistance, while retaining a good level of wet grip.

DE 10 2016 207396 A1 concerns a sulphur cross-linkable rubber mixture, particularly for a vehicle tyre. The sulphur-rubber mixture contains at least a diene rubber, silica, a blocked and/or unblocked mercaptosilanes as a silane coupling agent and a thermoplastic elastomer of the TPE-S type (styrene triblock copolymers).

FR 2 947 275 A1 relates to a tire, the tread of which comprises an elastomeric composition comprising: from 10 to 60 phr of a polybutadiene (BR) elastomer; from 10 to 60 phr of a saturated thermoplastic styrenic elastomer (TPS); a reinforcing load. The combined use of the BR and saturated TPS elastomers makes it possible to increase the rigidity and thus improve the road behavior of the tires, without compromising the hysteresis and therefore the rolling resistance of these tires.

Optimizing the tread compound for wet grip normally results in trade-off in rolling resistance. The present invention has the object to provide a composition for a tyre tread which has improved wet grip and good rolling resistance, without compromising on other performances.

This object is achieved by a cross-linkable rubber composition according to claim 1, a method of preparing a cross-linkable rubber composition according to claim 10, a cross-linked rubber composition according to claim 11, a method for preparing a tyre according to claim 13 and a tyre according to claim 14. Advantageous embodiments are the subject of the dependent claims. They may be combined freely unless the context clearly indicates otherwise.

Accordingly, a cross-linkable rubber composition is provided, the cross-linkable rubber composition comprising, per hundred parts by weight of rubber (phr) ≥ 1 phr to ≤ 100 phr of a rubber component selected from the group of styrene-butadiene rubber (SBR), polybutadiene rubber (BR), natural rubber (NR) or a mixture thereof. The composition further comprises ≥ 1 phr to ≤ 50 phr of a thermoplastic elastomer (TPE) with a glass transition temperature of ≥ -30 °C (measured by DSC, according to ISO 22768) and the composition further comprises an at least partially aliphatic resin component.

It has surprisingly been found that such a rubber composition, having a thermoplastic elastomer (TPE) with a comparatively high glass transition temperature T_{g} as an additive worked very well in broadening the tan delta curve of the cross-linked compound, indicating that the compound can perform well in a wide range of conditions and used as a rubber for a tyre tread (determined from DMA measurement according to ISO 4664-1), without deterioration of other compound properties.

Thermoplastic elastomers (also abbreviated as "TPEs") have a structure intermediate between thermoplastic polymers and elastomers. These are block copolymers composed of rigid thermoplastic blocks connected via flexible elastomer blocks. The thermoplastic elastomer used for the implementation of the invention is a block copolymer, the chemical nature of the thermoplastic blocks and elastomer blocks of which can vary.

The number-average molecular weight (denoted Mn) of the TPE is preferably between 30 000 and 500 000 g/mol, more preferably between 40 000 and 400 000 g/mol, most preferably in a range of 50 000 to 300 000 g/mol The number-average molecular weight (Mn) of the TPE elastomer can be determined, in a known manner, by steric exclusion chromatography (SEC).

TPEs generally exhibit two glass transition temperature peaks, the lowest temperature being relative to the elastomer part of the TPE and the highest temperature being relative to the thermoplastic part of the TPE. Thus, the flexible blocks of the TPEs are defined by a T_{g} which is less than ambient temperature (25° C), while the rigid blocks have a T_{g} which is greater than 80° C.

The glass transition temperatures discussed in connection with the TPEs refer to the lowest of the present T_{g} values, hence describing the T_{g} of the flexible, elastomer domains of the polymer. According to the invention the TPE has a glass transition temperature of ≥ -30 °C (measured by DSC, according to ISO 22768). This norm specifies a heating rate of 20 °C/min. Preferably the glass transition temperature T_{g} is ≥ -20°C. Without wishing to be bound by theory it is believed that only TPEs with a high T_{g} for their elastomer domains exhibit sufficient immiscibility to the rubber polymer blend, thereby increasing wet grip without increasing the rolling resistance.

The TPE is a copolymer wherein the elastomer part is unsaturated and the TPE comprises styrene blocks and diene blocks, these diene blocks being in particular isoprene or butadiene blocks. More preferably, this TPE elastomer is selected from the following group consisting of diblock or triblock copolymers which are linear or star-branched: styrene/butadiene (SB), styrene/isoprene (SI), styrene/butadiene/isoprene (SBI), styrene/butadiene/styrene (SBS), styrene/isoprene/styrene (SIS), styrene/butadiene/isoprene/styrene (SBIS) and the mixtures of these copolymers.

Commercial available TPEs according to the invention are the elastomers of SIS type sold by Kuraray under the name Hybrar 5125 or sold by Kraton under the name D1161, or also the elastomers of linear SBS type sold by Polimeri Europa under the name Europrene SOLT 166 or of star-branched SBS type sold by Kraton under the name D1184. Mention may also be made of the elastomers sold by Dexco Polymers under the Vector name (e.g., Vector 4114 or Vector 8508). Mention may be made, among multiblock TPEs, of the Vistamaxx TPE sold by Exxon; the COPE TPE sold by DSM under the Arnitel name or by DuPont under the Hytrel name or by Ticona under the Riteflex name; the PEBA TPE sold by Arkema under the PEBAX name; or the TPU TPE sold by Sartomer under the name TPU 7840 or by BASF under the Elastogran name..

According to the invention, the composition comprises ≥ 1 phr to ≤ 100 phr of a rubber component, selected from the group of styrene-butadiene rubber (SBR), polybutadiene rubber (BR), natural rubber (NR) or a mixture thereof. The SBR rubber component may contain one type of SBR rubber or several different types. Preferably, at least one type of SBR rubber is manufactured according to the solution process (SSBR or solution SBR). Likewise, the BR rubber component may contain one type of BR rubber or several different types.

The composition further comprises an at least partially aliphatic resin component. The resin component may, for example, be present in an amount of ≥ 5 phr to ≤ 60 phr. Suitable resins are resins without aromatic structure such as polyterpene resins, or aliphatic hydrocarbon resins such as C5 or DCPD (dicyclopentadiene) resins. Further suitable resins are partially aliphatic resins such as terpene phenolic resins. Preferably, the composition does not comprise an aromatic resin without aliphatic structures. Examples for aromatic resins to be excluded are C9 aromatic hydrocarbon resins and coumarone-indene resins.

It is further understood that in formulations discussed in connection with the present invention the phr amount of all rubber components adds up to 100.

The cross-linkable rubber composition according to the invention comprises cross-linkable groups in the individual rubber components. They may be cross-linked (cured, vulcanised) by methods known to a skilled person in the rubber technology field.

The cross-linkable rubber compositions may be sulphur-vulcanizable and/or peroxide-vulcanizable. Other vulcanization systems may also be used. If desired, additional additives besides TPE can be added. Examples of usual additives are resins, stabilizers, antioxidants, lubricants, fillers, dyes, pigments, flame retardants, conductive fibres and reinforcing fibres.

If desired, the cross-linkable rubber composition can also comprise a coupling agent. Suitable coupling agents comprise silane compounds. Particularly suitable silane compounds comprise di- and tetrasulphides and mercaptosilanes. It is possible for the rubber composition to be provided with a conductive filler to make it at least partially conductive.

In an embodiment of the rubber composition the TPE has a glass transition temperature of ≥ -30 °C to ≤ 10 °C (measured by DSC, according to ISO 22768). Preferably the glass transition temperature T_{g} is ≥ -20 °C to ≤ -10 °C.

In an another embodiment of the rubber composition the amount of TPE present in the composition is not considered as rubber for the purpose of determining the amounts of the composition's individual components based on their phr value. In such formulations the amount of TPE is considered an additive and the phr amount the rubber components, excluding the TPE, adds up to 100.

In an embodiment of the rubber composition at least one elastomer block of the TPE is selected from isoprene, butadiene, ethylene, butylene or a mixture thereof.

In another embodiment of the rubber composition the TPE is a styrene-isoprene-styrene (SIS), styrene- butadiene-styrene (SBS) or styrene-ethylene-butylene-styrene (SEBS) elastomer.

In another embodiment of the rubber composition the TPE has a styrene content of ≥ 15 to ≤ 70 weight-%. Preferably the TPE has a styrene content of ≥ 18 to ≤ 60 weight-%.

In another embodiment of the rubber composition the TPE has a Shore A hardness according to ISO 7619 of ≥ 50 to ≤ 90. Preferably the Shore A hardness is ≥ 60 to ≤ 75.

In another embodiment of the rubber composition the composition comprises ≥ 20 (preferably ≥ 20 to ≤ 100) phr of rubbers with a glass transition temperature of ≥ -120 °C to ≤ -50 °C (measured by DSC, according to ISO 22768). In particular, the composition may comprise a first styrene-butadiene rubber as a low T_{g} rubber and a second styrene-butadiene rubber as a high T_{g} rubber (Tg measured by DSC, according to ISO 22768). A cross-linkable rubber composition according to the invention may comprise:

| | phr |
|---|---|
| Rubber components | |
| Low T_{g} rubber with a T_{g} of ≥ -120 °C to ≤ -50°C | ≥ 20 to ≤ 100 |
| High Tg rubber with a T_{g} of ≥ -50°C to ≤ -10°C | ≥ 0 to ≤ 80 |

| Additives | |
|---|---|
| Polyterpene resin or terpene-phenolic resin | > 0 to ≤ 30 |
| TPE with a T_{g} of ≥ - 30 °C to ≤ - 10 °C and a styrene content of ≥ 15 to ≤ 60 weight-% | ≥ 5 to ≤ 30 |

In another embodiment of the rubber composition the resin component comprises a polyterpene resin, C5 resin, DCPD or terpene-phenolic resin. A preferred polyterpene resin has a Mw of ≥ 800 g/mol to ≤ 1200 g/mol. A preferred C5 resin has a Mw of ≥ 2000 to ≤ 4000 g/mol. The polyterpene resin is a resin obtained by polymerizing a terpene compound, or a hydrogenated product of the resin. The terpene compound is a hydrocarbon represented by (C₅H₈), or an oxygenous derivative thereof, whose basic structure is any of terpenes classified into monoterpenes (C₁₀H₁₆), sesquiterpenes (C₁₅H₂₄), diterpenes (C₂₀H₃₂), and the like. Examples of the compound include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include terpene resins formed from the terpene compounds described above, such as α-pinene resin, β-pinene resin, limonene resin, dipentene resin, or β-pinene/limonene resin, as well as hydrogenated terpene resins prepared by hydrogenating any of the terpene resins. Preferably non-hydrogenated terpene resins are used; most preferably resins comprising limonene as a co-monomer are used. Without wishing to be bound by theory it is believed that a higher affinity of a polyterpene resin to the mid-block of an SIS-type TPE, i.e., isoprene, could be the reason for a pronounced increase in tan delta at 0 °C (wet grip indicator).

The high affinity of resin could be related to the similar chemical structure of polyterpene resin and isoprene.

In another embodiment of the rubber composition comprises a first rubber with a T_{g} of ≥ - 120 °C to ≤ - 50 °C and a second rubber with a T_{g} of ≥ - 50 °C to ≤ - 10 °C. For example, the rubber component may comprise a first styrene-butadiene rubber and a second styrene-butadiene rubber with the above-mentioned glass temperature ranges.

In another embodiment of the rubber composition the composition comprises:

| | phr |
|---|---|
| Rubber components | |
| BR with a T_{g} of ≥ - 110 °C to ≤ - 80 °C | ≥ 15 to ≤ 45 |
| SSBR with a styrene content of ≥ 15 to ≤ 25 weight-%, a vinyl content of ≥ 40 to ≤ 60 weight-% and a T, of ≥ - 30 °C to ≤ - 15 °C | ≥ 30 to ≤ 60 |
| SSBR with a styrene content of ≥ 5 to ≤ 50 weight-%, a vinyl content of ≥ 20 to ≤ 60 weight-% and a T_{g} of ≥ - 70 °C to ≤ - 20 °C | ≥ 15 to ≤ 40 |

| Additives | |
|---|---|
| Polyterpene resin, C5 resin or terpene-phenolic resin | > 0 to ≤ 30 |
| Styrene-isoprene-styrene (SIS) block copolymer with a T_{g} of ≥ - 20 °C to ≤ - 10 °C and a styrene content of ≥ 15 to ≤ 25 weight-% | ≥ 5 to ≤ 30 |

In another embodiment of the rubber composition the composition comprises:

| | phr |
|---|---|
| Rubber components | |
| BR with a T_{g} of ≥ - 110 °C to ≤ -80 °C | ≥ 30 to ≤ 60 |
| SSBR with a styrene content of ≥ 15 to ≤ 30 weight-%, a vinyl content of ≥ 40 to ≤ 60 weight-% and a T_{g} of ≥ - 30 °C to ≤ - 15 °C | ≥ 5 to ≤ 35 |
| SSBR with a styrene content of ≥ 5 to ≤ 20 weight-%, a vinyl content of ≥ 15 to ≤ 40 weight-% and a T_{g} of ≥ - 70 °C to ≤ - 50 °C | ≥ 20 to ≤ 60 |

| Additives | |
|---|---|
| Polyterpene resin, C5 resin or terpene-phenolic resin | > 0 to ≤ 30 |
| Styrene-isoprene-styrene (SIS) block copolymer with a T_{g} of ≥ - 20 °C to ≤ - 10 °C and a styrene content of ≥ 15 to ≤ 25 weight-% | ≥ 5 to ≤ 30 |

The invention also relates to a method of preparing a cross-linkable rubber composition according to the invention, comprising the steps of:
A) providing a rubber component selected from the group of SBR, BR, NR or a mixture thereof;
B) adding ≥ 1 phr to ≤ 50 phr of a thermoplastic elastomer (TPE) with a glass transition temperature of ≥ -30 °C (measured by DSC, according to ISO 22768) and an at least partially aliphatic resin component.
C) adding curing agents.

Another aspect of the invention is a cross-linked rubber composition obtained by cross-linking a rubber composition according to the invention.

In an embodiment, the cross-linked rubber composition has a tan delta at 0 °C of ≥ 0.28 to ≤ 0.45 (determined from DMA measurements according to ISO 4664-1, frequency 10 Hz, 0.1% dynamic strain) and a tan delta at 70 °C of ≥ 0.10 to ≤ 0.25 (determined from DMA measurements according to ISO 4664-1, frequency 10 Hz, 6 % dynamic strain). Preferably the tan delta at 0 °C is ≥ 0.28 to ≤ 0.33 and the tan delta at 70 °C is ≥ 0.14 to ≤ 0.16.

In another embodiment of the cross-linked rubber composition its tan delta curve (determined from dynamic mechanical analysis (DMA) measurements according to ISO 4664-1, frequency 10 Hz, 0.1% dynamic strain) has a full width at half maximum (FWHM) range of ≥ 50 °C to ≤ 75 °C.

In another embodiment the cross-linked rubber composition has a rebound at 23 °C, determined according to ISO 4662, of ≥ 20 % to ≤ 30% (preferably ≥ 22 to ≤ 27%).

In another embodiment the cross-linked rubber composition has a rebound at 70 °C, determined according to ISO 4662, of ≥ 50 % to ≤ 60% (preferably ≥ 53 to ≤ 56%).

The present invention also relates to a method of preparing a tyre, comprising the steps of:
- providing a tyre assembly comprising a rubber composition according to the invention;
- cross-linking at least the rubber composition according to the invention in the tyre assembly.

The present invention also encompasses a tyre comprising a tyre tread, wherein the tyre tread comprises a cross-linked rubber composition according to the invention.

### Examples

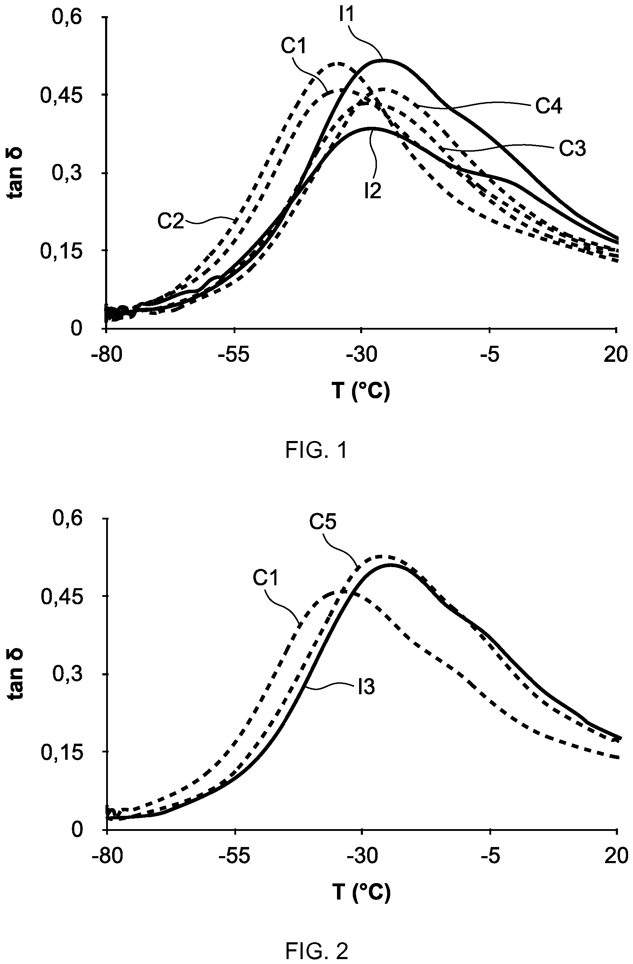

The invention will be further described with reference to the following examples and figure without wishing to be limited by them. FIG. 1 shows temperature-dependent DMA curves for the cured compositions I1, I2 and C1 to C4. FIG. 2 shows temperature-dependent DMA curves for the cured compositions I3, C1 and C5.

In accordance with the preceding, cross-linkable rubber compositions were prepared as described in the tables below. In a first step, all rubber components were added and mixed, followed by a second step wherein all additives were added and mixed and a last step wherein the curing package was added. Compositions C1 to C5 are comparative examples and compositions I1 to I3 are compositions according to the invention. Unless stated otherwise, glass temperatures given were determined by DSC according to ISO 22768.

SSBR I had a styrene content of 21%, a vinyl content of 50% and a T_{g} of -25 °C.

SSBR II had a styrene content of 15%, a vinyl content of 30% and a T_{g} of -62 °C.

BRI was a butadiene rubber with a cis content of 98% and a T_{g} of -105 °C.

SIS was a styrene-isoprene-styrene block copolymer with a T_{g} of -13 °C, a Shore A hardness (ISO 7619) of 60 and a styrene content of 20 weight-%.

The polyterpene resin had a molecular weight of 1090 g/mol, a softening point of 125 ° C, and a glass transition temperature of 73 °C.

The AMS (alpha methyl styrene) resin had a molecular weight of 1300 g/mol.

The aliphatic C5 resin had a molecular weight of 2150 g/mol and the terpene phenolic resin had a molecular weight of 565 g/mol.

The coumarone-indene resin had a softening point of 85 to 95 °C (ring and ball method according to ASTM D3461).

The table below shows the compositions of I1 to I3 and C1 to C5. Amounts for the components are given in PHR. It should be noted that in the examples the SIS is considered part of the additive package and therefore does not contribute to total amount of rubber with respect to the phr values for the calculation of the individual amounts of the composition's components.

| | **I1** | **I2** | **I3** | **C1** | **C2** | **C3** | **C4** | **C5** |
|---|---|---|---|---|---|---|---|---|
| Rubber components | | | | | | | | |
| BRI | 30 | 30 | 30 | 30 | 30 | 30 | 30 | 30 |
| SSBR I | 45 | 45 | 45 | 45 | 45 | 45 | 45 | 45 |
| SSBR II | 25 | 25 | 25 | 25 | 25 | 25 | 25 | 25 |

| Additives | | | | | | | | |
|---|---|---|---|---|---|---|---|---|
| Carbon Black | 7 | 7 | 7 | 7 | 7 | 7 | 7 | 7 |
| Silica | 100 | 100 | 100 | 100 | 100 | 100 | 100 | 100 |
| TESPT | 8 | 8 | 8 | 8 | 8 | 8 | 8 | 8 |
| Processing oil, ZnO, stearic acid, antidegradant and processing promoter | 46 | 46 | 46 | 66 | 66 | 46 | 46 | 46 |
| Polyterpene resin | 20 | | | | | 20 | | |
| AMS resin | | | | | | | 20 | |
| Aliphatic C5 resin | | 20 | | | | | | |
| Terpene phenolic resin | | | 20 | | | | | |
| Coumarone indene resin | | | | | | | | 20 |
| SIS | 10 | 10 | 10 | 10 | | | 10 | 10 |

| Curing package | | | | | | | | |
|---|---|---|---|---|---|---|---|---|
| Sulphur and accelerators | 5.6 | 5.6 | 5.6 | 5.6 | 5.6 | 5.6 | 5.6 | 5.6 |

The following table shows the results obtained from the cured compositions.

| Result | **I1** | **I2** | **I3** | **C1** | **C2** | **C3** | **C4** | **C5** |
|---|---|---|---|---|---|---|---|---|
| Rebound 23 °C (%) | 25 | 27 | 25 | 35 | 35 | 28 | 29 | 27 |
| Rebound 70 °C (%) | 56 | 55 | 56 | 59 | 60 | 55 | 58 | 57 |
| Tan δ 0 °C (Wet grip indicator) | 0.33 | 0.28 | 0.32 | 0.21 | 0.19 | 0.23 | 0.25 | 0.29 |
| Tan δ 70 °C (RR indicator) | 0.14 | 0.16 | 0.14 | 0.13 | 0.13 | 0.15 | 0.15 | 0.14 |
| Full width half maximum (FWHM) (°C) | -44 to 8 | -48 to 14 | -43 to 8 | -51 to -3 | -52 to -13 | -46 to 1 | -43 to 2 | -44 to 4 |
| FWHM range (°C) | 52 | 62 | 51 | 48 | 39 | 47 | 45 | 48 |

Rebound at 23 °C (ISO 4662) is believed to be an indicator for wet grip. Lower rebound value at 23 °C relates to an improvement in wet grip. Rebound testing at 70 °C (ISO 4662) is believed to be an indicator for rolling resistance (RR). A higher rebound value at 70 °C relates to a lower rolling resistance for a tyre whose tread comprises such a cured rubber. In a similar fashion, a higher tan δ at 0 °C is related to better wet grip, whereas a lower tan δ at 70 °C is an indicator for improved rolling resistance. The tan δ values were measured with a DMA test (ISO 4664-1) using the following settings:
- DMA tests -80 to 25 °C (dynamic strain 0.1% and frequency 10 Hz)
- DMA tests 25 to 80 °C (dynamic strain 6% and frequency 10 Hz)

The comparative example C 1 contains SIS and does not contain a resin and C2 is a reference which does not contain any resin and SIS. The comparative example C1 reveals a slightly broader tan delta curve compared to C2 which is also evident from the FWHM range.

With the addition of at least partially aliphatic resins such as polyterpene resin, terpene phenolic resin and C5 resin to C1, the FWHM range for inventive compositions increases indicating the ability of the compound to perform well in a wide temperature range. This is due to the enrichment of terpene based resins and C5 resin in isoprene phase which is the mid-block of SIS. As a result of this, tan δ at 0 °C is increased significantly indicating an increase in wet grip. Therefore, the combination of SIS with terpene based and C5 resin eliminates the trade-off between winter performance and wet grip. On the other hand, when adding aromatic resin such as AMS resin and Coumarone Indene resin to C 1, there is a slight increase in tan delta at 0°C but there is no increase in FWHM range. Therefore, the combination of SIS with terpene based and C5 resin eliminates the trade-off between winter performance and wet grip.

## Claims

1. A cross-linkable rubber composition, the cross-linkable rubber composition comprising, per hundred parts by weight of rubber (phr):
≥ 1 phr to ≤ 100 phr of a rubber component selected from the group of styrene-butadiene rubber (SBR), polybutadiene rubber (BR), natural rubber (NR) or a mixture thereof;
wherein
the composition further comprises ≥ 1 phr to ≤ 50 phr of a thermoplastic elastomer (TPE) with a glass transition temperature of ≥ -30 °C (measured by DSC, according to ISO 22768)
and further comprises an at least partially aliphatic resin component,
wherein the TPE is selected from the group consisting of diblock or triblock copolymers which are linear or star-branched selected from styrene/butadiene (SB), styrene/isoprene (SI), styrene/butadiene/isoprene (SBI), styrene/butadiene/styrene (SBS), styrene/isoprene/styrene (SIS), styrene/butadiene/isoprene/styrene (SBIS) and the mixtures of these copolymers and wherein the resin component comprises a polyterpene resin, C5 resin, dicyclopentadiene (DCPD) or terpene phenolic resin.

2. The rubber composition according to claim 1, wherein the TPE has a glass transition temperature of ≥ -30 °C to ≤ 10 °C (measured by DSC, according to ISO 22768).

3. The rubber composition according to claim 1 or 2, wherein the amount of TPE present in the composition is not considered as rubber for the purpose of determining the amounts of the composition's individual components based on their phr value.

4. The rubber composition according to one of claims 1 to 3, wherein at least one elastomer block of the TPE is selected from isoprene, butadiene, ethylene, butylene or a mixture thereof.

5. The rubber composition according to one of claims 1 to 4, wherein the TPE is a styrene-isoprene-styrene (SIS) or styrene- butadiene-styrene (SBS) elastomer.

6. The rubber composition according to one of claims 1 to 5, wherein the composition comprises ≥ 20 phr of rubbers with a glass transition temperature of ≥ -120 °C to ≤ -50 °C (measured by DSC, according to ISO 22768).

7. The rubber composition according to one of claims 1 to 6, wherein the rubber composition comprises a first rubber with a T_{g} of ≥ - 120 °C to ≤ - 50 °C and a second rubber with a T_{g} of ≥ - 50 °C to ≤ - 10 °C.

8. The rubber composition according to one of claims 1 to 7, wherein the composition comprises:
| | phr |
|---|---|
| Rubber components | |
| BR with a T_{g} of ≥ - 110 °C to ≤ - 80 °C | ≥ 15 to ≤ 45 |
| SSBR with a styrene content of ≥ 15 to ≤ 25 weight-%, a vinyl content of ≥ 40 to ≤ 60 weight-% and a T_{g} of ≥ - 30 °C to ≤ - 15 °C | ≥ 30 to ≤ 60 |
| SSBR with a styrene content of ≥ 5 to ≤ 50 weight-%, a vinyl content of ≥ 20 to ≤ 60 weight-% and a T_{g} of ≥ - 70 °C to ≤ - 20 °C | ≥ 15 to ≤ 40 |
| Additives | |
|---|---|
| Polyterpene resin, C5 resin or terpene-phenolic resin | > 0 to ≤ 30 |
| Styrene-isoprene-styrene (SIS) block copolymer with a T_{g} of ≥ - 20 °C to ≤ - 10 °C and a styrene content of ≥ 15 to ≤ 25 weight-% | ≥ 5 to ≤ 30 |

9. The rubber composition according to one of claims 1 to 7, wherein the composition comprises:
| | phr |
|---|---|
| Rubber components | |
| BR with a T_{g} of ≥ - 110 °C to ≤ -80 °C | ≥ 30 to ≤ 60 |
| SSBR with a styrene content of ≥ 15 to ≤ 30 weight-%, a vinyl content of ≥ 40 to ≤ 60 weight-% and a T_{g} of ≥ - 30 °C to ≤ - 15 °C | ≥ 5 to ≤ 35 |
| SSBR with a styrene content of ≥ 5 to ≤ 20 weight-%, a vinyl content of ≥ 15 to ≤ 40 weight-% and a T_{g} of ≥ - 70 °C to ≤ - 50 °C | ≥ 20 to ≤ 60 |
| Additives | |
|---|---|
| Polyterpene resin, C5 resin or terpene-phenolic resin | > 0 to ≤ 30 |
| Styrene-isoprene-styrene (SIS) block copolymer with a T_{g} of ≥ - 20 °C to ≤ - 10 °C and a styrene content of ≥ 15 to ≤ 25 weight-% | ≥ 5 to ≤ 30 |

10. A method of preparing a cross-linkable rubber composition according to one of claims 1 to 9, comprising the steps of:
A) providing a rubber component selected from the group of SBR, BR, NR or a mixture thereof;
B) adding ≥ 1 phr to ≤ 50 phr of a thermoplastic elastomer (TPE) with a glass transition temperature of ≥ -30 °C (measured by DSC, according to ISO 22768) and an at least partially aliphatic resin component, wherein the TPE is selected from the group consisting of diblock or triblock copolymers which are linear or star-branched selected from styrene/butadiene (SB), styrene/isoprene (SI), styrene/butadiene/isoprene (SBI), styrene/butadiene/styrene (SBS), styrene/isoprene/styrene (SIS), styrene/butadiene/isoprene/styrene (SBIS) and the mixtures of these copolymers and wherein the resin component comprises a polyterpene resin, C5 resin, dicyclopentadiene (DCPD) or terpene phenolic resin;
C) adding curing agents.

11. A cross-linked rubber composition, **characterised in that** it is obtained by cross-linking a rubber composition according to one of claims 1 to 9.

12. The cross-linked rubber composition according to claim 11 with a tan delta at 0 °C of ≥ 0.28 to ≤ 0.45 (determined from DMA measurements according to ISO 4664-1, frequency 10 Hz, 0.1% dynamic strain) and a tan delta at 70 °C of ≥ 0.10 to ≤ 0.25 (determined from DMA measurements according to ISO 4664-1, frequency 10 Hz, 6 % dynamic strain).

13. A method of preparing a tyre, comprising the steps of:
- providing a tyre assembly comprising a rubber composition according to one of claims 1 to 9;
- cross-linking at least the rubber composition according to one of claims 1 to 9 in the tyre assembly.

14. A tyre comprising a tyre tread, **characterised in that** the tyre tread comprises a cross-linked rubber composition according to claim 11 or 12.

## Patentansprüche

1. Vernetzbare Kautschukzusammensetzung, wobei die vernetzbare Kautschukzusammensetzung pro hundert Gewichtsteile Kautschuk (phr) umfasst:
≥ 1 phr bis ≤ 100 phr an einer Kautschukkomponente ausgewählt aus der Gruppe von Styrol-Butadien-Kautschuk (SBR), Polybutadienkautschuk (BR), Naturkautschuk (NR) und einem Gemisch davon;
wobei
die Zusammensetzung ferner ≥ 1 phr bis ≤ 50 phr an einem thermoplastischen Elastomer (TPE) mit einer Glasübergangstemperatur von ≥ -30 °C (gemessen durch DSC gemäß ISO 22768) umfasst,
und ferner eine wenigstens teilweise aliphatische Harzkomponente umfasst,
wobei das TPE ausgewählt ist aus der Gruppe bestehend aus Zweiblock- und Dreiblock-Copolymeren, die linear oder sternförmig verzweigt sind, ausgewählt aus Styrol/Butadien (SB), Styrol/Isopren (SI), Styrol/Butadien/Isopren (SBI), Styrol/Butadien/Styrol (SBS), Styrol/Isopren/Styrol (SIS), Styrol/Butadien/Isopren/Styrol (SBIS) und den Gemischen dieser Copolymere, und wobei die Harzkomponente ein Polyterpenharz, C5-Harz, Dicyclopentadien (DCPD) oder Terpen-Phenol-Harz umfasst.

2. Kautschukzusammensetzung gemäß Anspruch 1, wobei das TPE eine Glasübergangstemperatur von ≥ -30 °C bis ≤ 10 °C (gemessen durch DSC gemäß ISO 22768) aufweist.

3. Kautschukzusammensetzung gemäß Anspruch 1 oder 2, wobei die Menge an TPE, die in der Zusammensetzung vorhanden ist, nicht als Kautschuk für den Zweck der Bestimmung der Mengen der einzelnen Komponenten der Zusammensetzung auf Grundlage ihres phr-Werts betrachtet wird.

4. Kautschukzusammensetzung gemäß einem der Ansprüche 1 bis 3, wobei wenigstens ein Elastomerblock des TPE ausgewählt ist aus Isopren, Butadien, Ethylen, Butylen oder einem Gemisch davon.

5. Kautschukzusammensetzung gemäß einem der Ansprüche 1 bis 4, wobei das TPE ein Styrol-Isopren-Styrol- (SIS) oder Styrol-Butadien-Styrol(SBS)-Elastomer ist.

6. Kautschukzusammensetzung gemäß einem der Ansprüche 1 bis 5, wobei die Zusammensetzung ≥ 20 phr an Kautschuken mit einer Glasübergangstemperatur von ≥ -120 °C bis ≤ -50 °C (gemessen durch DSC gemäß ISO 22768) umfasst.

7. Kautschukzusammensetzung gemäß einem der Ansprüche 1 bis 6, wobei die Kautschukzusammensetzung einen ersten Kautschuk mit einer Tg von ≥ -120 °C bis ≤ -50 °C und einen zweiten Kautschuk mit einer Tg von ≥ -50 °C bis ≤ -10 °C umfasst.

8. Kautschukzusammensetzung gemäß einem der Ansprüche 1 bis 7, wobei die Zusammensetzung umfasst:
| | phr |
|---|---|
| Kautschukkomponenten | |
| BR mit einer Tg von ≥ -120°C bis ≤ -80°C | ≥ 15 bis ≤ 45 |
| SSBR mit einem Styrolgehalt von ≥ 15 bis ≤ 25 Gew.-%, einem Vinylgehalt von ≥ 40 bis ≤ 60 Gew.-% und einer Tg von ≥ -30°C bis ≤ -15°C | ≥ 30 bis ≤ 60 |
| SSBR mit einem Styrolgehalt von ≥ 5 bis ≤ 50 Gew.-%, einem Vinylgehalt von ≥ 20 bis ≤ 60 Gew.-% und einer Tg von ≥ -70°C bis ≤ -20°C | ≥ 15 bis ≤ 40 |
| Zusatzstoffe | |
|---|---|
| Polyterpenharz, C5-Harz oder Terpen-Phenol-Harz | ≥ 0 bis ≤ 30 |
| Styrol-Isopren-Styrol(SIS)-Blockcopolymer mit einer Tg von ≥ -20°C bis ≤ -10°C und einem Styrolgehalt von ≥ 15 bis ≤ 25 Gew.-% | ≥ 5 bis ≤ 30 |

9. Kautschukzusammensetzung gemäß einem der Ansprüche 1 bis 7, wobei die Zusammensetzung umfasst:
| | phr |
|---|---|
| Kautschukkomponenten | |
| BR mit einer Tg von ≥ -110°C bis ≤ -80°C | ≥ 30 bis ≤ 60 |
| SSBR mit einem Styrolgehalt von ≥ 15 bis ≤ 30 Gew.-%, einem Vinylgehalt von ≥ 40 bis ≤ 60 Gew.-% und einer Tg von ≥ -30°C bis ≤ -15°C | ≥ 5 bis ≤ 35 |
| SSBR mit einem Styrolgehalt von ≥ 5 bis ≤ 20 Gew.-%, einem Vinylgehalt von ≥ 15 bis ≤ 40 Gew.-% und einer Tg von ≥ -70°C bis ≤ -50°C | ≥ 20 bis ≤ 60 |
| Zusatzstoffe | |
|---|---|
| Polyterpenharz, C5-Harz oder Terpen-Phenol-Harz | ≥ 0 bis ≤ 30 |
| Styrol-Isopren-Styrol(SIS)-Blockcopolymer mit einer Tg von ≥ -20°C bis ≤ -10°C und einem Styrolgehalt von ≥ 15 bis ≤ 25 Gew.-% | ≥ 5 bis ≤ 30 |

10. Verfahren zur Herstellung einer vernetzbaren Kautschukzusammensetzung gemäß einem der Ansprüche 1 bis 9, umfassend die Schritte:
A) Bereitstellen einer Kautschukkomponente ausgewählt aus der Gruppe von SBR, BR, NR oder einem Gemisch davon;
B) Zugeben von ≥ 1 phr bis ≤ 50 phr an einem thermoplastischen Elastomer (TPE) mit einer Glasübergangstemperatur von ≥ -30 °C (gemessen durch DSC gemäß ISO 22768) und einer wenigstens teilweise aliphatische Harzkomponente, wobei das TPE ausgewählt ist aus der Gruppe bestehend aus Zweiblock- und Dreiblock-Copolymeren, die linear oder sternförmig verzweigt sind, ausgewählt aus Styrol/Butadien (SB), Styrol/Isopren (SI), Styrol/Butadien/Isopren (SBI), Styrol/Butadien/Styrol (SBS), Styrol/Isopren/Styrol (SIS), Styrol/Butadien/Isopren/Styrol (SBIS) und den Gemischen dieser Copolymere, und wobei die Harzkomponente ein Polyterpenharz, C5-Harz, Dicyclopentadien (DCPD) oder Terpen-Phenol-Harz umfasst;
c) Zugeben von Härtern.

11. Vernetzte Kautschukzusammensetzung, **dadurch gekennzeichnet, dass** sie durch Vernetzen einer Kautschukzusammensetzung gemäß einem der Ansprüche 1 bis 9 erhalten ist.

12. Vernetzte Kautschukzusammensetzung gemäß Anspruch 11 mit einem Tan-Delta bei 0 °C von ≥ 0,28 bis ≤ 0,45 (bestimmt aus DMA-Messungen gemäß ISO 4664-1, Frequenz 10 Hz, 0,1 % dynamische Belastung) und einem Tan-Delta bei 70 °C von ≥ 0,10 bis ≤ 0,25 (bestimmt aus DMA-Messungen gemäß ISO 4664-1, Frequenz 10 Hz, 6 % dynamische Belastung).

13. Verfahren zur Herstellung eines Reifens, umfassend die Schritte:
- Bereitstellen einer Reifenbaugruppe, umfassend eine Kautschukzusammensetzung gemäß einem der Ansprüche 1 bis 9;
- Vernetzen wenigstens der Kautschukzusammensetzung gemäß einem der Ansprüche 1 bis 9 in der Reifenbaugruppe.

14. Reifen, umfassend eine Reifenlauffläche, **dadurch gekennzeichnet, dass** die Reifenlauffläche eine vernetzte Kautschukzusammensetzung gemäß Anspruch 11 oder 12 umfasst.

## Revendications

1. Composition de caoutchouc réticulable, la composition de caoutchouc réticulable comprenant, par cent parties en poids de caoutchouc (phr) :
≥ 1 phr à ≤ 100 phr d'un composant de type caoutchouc choisi dans le groupe composé d'un caoutchouc de styrène-butadiène (SBR), un caoutchouc de polybutadiène (BR), un caoutchouc naturel (NR) ou un mélange correspondant ;
la composition comprenant en outre ≥ 1 phr à ≤ 50 phr d'un élastomère thermoplastique (TPE) doté d'une température de transition vitreuse de ≥ - 30 °C (mesurée par DSC, selon la norme ISO 22768) et comprenant en outre un composant de type résine au moins partiellement aliphatique,
le TPE étant choisi dans le groupe constitué par des copolymères diblocs ou triblocs qui sont linéaires ou ramifiés en étoile choisis parmi un styrène/butadiène (SB), un styrène/isoprène (SI), un styrène/butadiène/isoprène (SBI), un styrène/butadiène/styrène (SBS), un styrène/isoprène/styrène (SIS), un styrène/butadiène/isoprène/styrène (SBIS) et les mélanges de ces copolymères et le composant de type résine comprenant une résine de polyterpène, une résine en C5, une résine phénolique de dicyclopentadiène (DCPD) ou de terpène.

2. Composition de caoutchouc selon la revendication 1, le TPE ayant une température de transition vitreuse de ≥ -30 °C à ≤ 10 °C (mesurée par DSC, selon la norme ISO 22768).

3. Composition de caoutchouc selon la revendication 1 ou 2, la quantité de TPE présent dans la composition n'étant pas considérée comme caoutchouc dans le but de déterminer les quantités des composants individuels de la composition sur la base de leur valeur de phr.

4. Composition de caoutchouc selon l'une des revendications 1 à 3, au moins un bloc d'élastomère du TPE étant choisi parmi l'isoprène, le butadiène, l'éthylène, le butylène ou un mélange correspondant.

5. Composition de caoutchouc selon l'une des revendications 1 à 4, le TPE étant un styrène/isoprène/styrène (SIS) ou un styrène/butadiène/styrène (SBS).

6. Composition de caoutchouc selon l'une des revendications 1 à 5, la composition comprenant ≥ 20 phr de caoutchoucs dotés d'une température de transition vitreuse de ≥ -120 °C à ≤ -50 °C (mesurée par DSC, selon la norme ISO 22768).

7. Composition de caoutchouc selon l'une des revendications 1 à 6, la composition de caoutchouc comprenant un premier caoutchouc doté d'une T_{g} de ≥ -120 °C à ≤ -50 °C et un deuxième caoutchouc doté d'une T_{g} de ≥ -50 °C à ≤ -10 °C.

8. Composition de caoutchouc selon l'une des revendications 1 à 7 la composition comprenant :
| | phr |
|---|---|
| Composants de type caoutchouc | |
| BR doté d'une T_{g} de ≥ -110 °C à ≤ -80 °C | ≥ 15 à ≤ 45 |
| SSBR doté d'une teneur en styrène de ≥ 15 à ≤ 25 % en poids, d'une teneur en vinyle de ≥ 40 à ≤ 60 % en poids et d'une T_{g} de ≥ -30 °C à ≤ -15 °C | ≥ 30 à ≤ 60 |
| SSBR doté d'une teneur en styrène de ≥ 5 à ≤ 50 % en poids, d'une teneur en vinyle de ≥ 20 à ≤ 60 % en poids et d'une T_{g} de ≥ -70 °C à ≤ -20 °C | ≥ 15 à ≤ 40 |
| Additifs | |
|---|---|
| Résine de polyterpène, résine en C5 ou résine terpène-phénolique | > 0 à ≤ 30 |
| Copolymère à blocs de styrène-isoprène-styrène (SIS) doté d'une T_{g} de ≥ -20 °C à ≤ -10 °C et d'une teneur en styrène de ≥ 15 à ≤ 25 % en poids | ≥ 5 à ≤ 30 |

9. Composition de caoutchouc selon l'une des revendications 1 à 7, la composition comprenant :
| | phr |
|---|---|
| Composants de type caoutchouc | |
| BR doté d'une T_{g} de ≥ -110 °C à ≤ -80 °C | ≥ 30 à ≤ 60 |
| SSBR doté d'une teneur en styrène de ≥ 15 à ≤ 30 % en poids, d'une teneur en vinyle de ≥ 40 à ≤ 60 % en poids et d'une T_{g} de ≥ -30 °C à ≤ -15 °C | ≥ 5 à ≤ 35 |
| SSBR doté d'une teneur en styrène de ≥ 5 à ≤ 20 % en poids, d'une teneur en vinyle de ≥ 15 à ≤ 40 % en poids et d'une T_{g} de ≥ -70 °C à ≤ -50 °C | ≥ 20 à ≤ 60 |
| Additifs | |
|---|---|
| Résine de polyterpène, résine en C5 ou résine terpène-phénolique | > 0 à ≤ 30 |
| Copolymère à blocs de styrène-isoprène-styrène (SIS) doté d'une T_{g} de ≥ -20 °C | ≥ 5 à ≤ 30 |
| à ≤ -10 °C et d'une teneur en styrène de ≥ 15 à ≤ 25 % en poids | |

10. Procédé de préparation d'une composition de caoutchouc réticulable selon l'une des revendications 1 à 9, comprenant les étapes de :
A) mise à disposition d'un composant de type caoutchouc choisi dans le groupe composé de SBR, BR, NR ou un mélange correspondant ;
B) ajout de ≥ 1 phr à ≤ 50 phr d'un élastomère thermoplastique (TPE) doté d'une température de transition vitreuse de ≥ -30 °C (mesurée par DSC, selon la norme ISO 22768) et d'un composant de type résine au moins partiellement aliphatique, le TPE étant choisi dans le groupe constitué par des copolymères diblocs ou triblocs qui sont linéaires ou ramifiés en étoile choisis parmi un styrène/butadiène (SB), un styrène/isoprène (SI), un styrène/butadiène/isoprène (SBI), un styrène/butadiène/styrène (SBS), un styrène/isoprène/styrène (SIS), un styrène/butadiène/isoprène/styrène (SBIS) et les mélanges de ces copolymères, et le composant de type résine comprenant une résine de polyterpène, une résine en C5, une résine phénolique de dicyclopentadiène (DCPD) ou de terpène ;
C) ajout d'agents de durcissement.

11. Composition de caoutchouc réticulée, **caractérisé en ce qu'**elle est obtenue par réticulation d'une composition de caoutchouc selon l'une des revendications 1 à 9.

12. Composition de caoutchouc réticulée selon la revendication 11 dotée d'un tan delta à 0 °C de ≥ 0,28 à ≤ 0,45 (déterminé à partir de mesures de DMA selon la norme ISO 4664-1, fréquence 10 Hz, 0,1 % de contrainte dynamique) et d'un tan delta à 70 °C de ≥ 0,10 à ≤ 0,25 (déterminé à partir de mesures de DMA selon la norme ISO 4664-1, fréquence 10 Hz, 6 % de contrainte dynamique).

13. Procédé de préparation d'un pneu, comprenant les étapes de :
- mise à disposition d'un ensemble pneumatique comprenant une composition de caoutchouc selon l'une des revendications 1 à 9 ;
- réticulation d'au moins la composition de caoutchouc selon l'une des revendications 1 à 9 dans l'ensemble pneumatique.

14. Pneu comprenant une bande de roulement de pneu, **caractérisé en ce que** la bande de roulement de pneu comprend une composition de caoutchouc réticulée selon la revendication 11 ou 12.
